# EUROPÄISCHE PATENTSCHRIFT

(11) **EP 1 104 731 B1**
(45) Veröffentlichungstag und Bekanntmachung des Hinweises auf die Patenterteilung: **01.03.2017**
(21) Anmeldenummer: 00121534.2
(22) Anmeldetag: 30.09.2000
(51) Int. Cl.: B60T 8/00, B60T 8/26

(54) **Verfahren zur Abbremsung eines Fahrzeuges**
Vehicle braking procedure
Procédé pour freiner un véhicule

(30) Priorität: 03.12.1999 DE 19958324
(43) Veröffentlichungstag der Anmeldung: 06.06.2001
(73) Patentinhaber: WABCO GmbH, 30453 Hannover (DE)
(72) Erfinder: Schmidt, Detlef, 30989 Gehrden (DE); Stanusch, Gerald, 31177 Harsum (DE); Wolff, Hans-Klaus, 31832 Springe (DE)
(74) Vertreter: Schrödter, Manfred

(56) Entgegenhaltungen:
- US-A- 3 951 466
- US-A- 4 094 555
- US-A- 5 163 742

## Beschreibung

Die Erfindung betrifft ein Verfahren zur Abbremsung eines Fahrzeuges gemäß dem Oberbegriff des Patentanspruchs 1.

Ein gattungsgemäßes Verfahren ist aus der DE 40 07 360 A1 bekannt.

Bei dem bekannten Verfahren wird bei einer Abbremsung des Fahrzeugs der Bremsdruck an der Hinterachse verändert, wenn eine nennenswerte Differenz zwischen den Bremsschlupfwerten an der Vorderachse und der Hinterachse auftritt. Wenn beispielsweise der Bremsschlupf an der Hinterachse einen nennenswert höheren Wert aufweist als der Bremsschlupf an der Vorderachse, dann wird dies als Indiz für eine im Sinne einer achslastabhängigen Bremskraftverteilung unerwünscht hohe Bremskraft an der Hinterachse betrachtet und infolgedessen der Bremsdruck zwecks Verringerung der Bremskraft reduziert, bis der Bremsschlupf an der Hinterachse im wesentlichen dem Bremsschlupf an der Vorderachse entspricht.

Wenn aber in dem zuvor beschriebenen Fall der Vorderachsbremskreis eine relativ schlechte Bremswirkung hat oder sogar vollständig ausfällt, dann kann es bei dem zuvor beschriebenen Verfahren vorkommen, daß der Bremsdruck in dem noch voll funktionsfähigen Hinterachsbremskreis derart stark abgesenkt wird, daß das Fahrzeug kaum oder gar nicht mehr abbremsbar ist.

Der Erfindung liegt daher die Aufgabe zugrunde, eine ausreichende Abbremsbarkeit des Fahrzeuges auch bei Defekten oder Störungen an einem der Bremskreise sicherzustellen.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß mit relativ einfachen Mitteln eine aureichende und gut dosierbare Bremswirkung und somit ein sicheres Bremsverhalten gewährleistet wird. Es ist hierbei lediglich der unerwünschte Unterschied zwischen dem gemessenen tatsächlichen Verzögerungswert und dem Grenzverzögerungswert, infolgedessen eine automatische Anpassung der Bremskraft erfolgen soll, vorzunehmen. Geeignete Vorschläge hierfür sind in dem Ausführungsbeispiel angegeben. Als unerwünschter Unterschied im Sinne der nachfolgend beschriebenen Erfindung ist sowohl ein unerwünscht geringer Unterschied als auch ein unerwünscht hoher Unterschied zu verstehen, des weiteren auch eine unerwünschte Unterschreitung oder Überschreitung wenigstens eines Grenzverzögerungswerts.

Gemäß einer vorteilhaften Ausgestaltung der Erfindung wird als ein Grenzverzögerungswert ein einen unteren zulässigen Grenzwert darstellender Mindestverzögerungswert bestimmt. Bei einer Unterschreitung dieses Mindestverzögerungswerts wird automatisch die Bremskraft an der Hinterachse erhöht. Dies hat den Vorteil, daß. mit sehr geringem Aufwand auch bei einer nur teilweise verschlechterten Bremswirkung des Vorderachsbremskreises, z. B. infolge verölter Bremsbeläge oder nachlassender Bremswirkung durch Temperaturfading, eine sichere Abbremsung des Fahrzeuges gewährleistet ist. Es wird immer zumindest der dem jeweiligen Bremswunsch des Fahrers zugeordnete Mindestverzögerungswert erreicht.

Gemäß einer vorteilhaften Ausgestaltung der Erfindung wird als ein Grenzverzögerungswert ein einen oberen zulässigen Grenzwert darstellender Höchstverzögerungswert bestimmt. Wenn der gemessene tatsächliche Verzögerungswert des Fahrzeuges diesen Höchstverzögerungswert erreicht oder überschreitet, wird automatisch die Gesamtbremskraft des Fahrzeuges begrenzt oder verringert. Hierdurch kann eine zu heftige Bremsreaktion bei relativ leichten unbeladenen Fahrzeugen, welche den Fahrer überraschen und überfordern könnte, vermieden werden. Ein weiterer Vorteil dieser Ausgestaltung ist, daß Abbremsungen bei derartigen leichten Fahrzeugen besser dosiert werden können. Mit einer derartigen Bremskraftbegrenzung ausgestattete Zugmaschinen lassen sich zudem ohne weiteres mit einer Vielzahl von Anhängertypen kombinieren.

Für den Fahrzeughersteller ergibt sich der weitere Vorteil, daß eine Fahrzeugserie, bestehend aus Fahrzeugen mit unterschiedlichem zulässigen Gesamtgewicht, mit einer gleichartigen Bremsanlage ausgestattet werden können und die Auslegung dieser einheitlichen Bremsanlage, insbesondere die Auslegung der Bremszylinder, ebenfalls mit wenig Aufwand möglich ist. Ein weiterer Vorteil ist, daß derartig ausgestattete Fahrzeuge unabhängig von der Beladung immer eine annähernd gleich Bremswirkung aufweisen, welche innerhalb der durch den Mindestverzögerungswert und den Höchstverzögerungswert festgelegten Grenzen liegt.

Wenn, wie in vorteilhaften Ausgestaltungen der Erfindung ausgeführt, der Mindestverzögerungswert und/oder der Höchstverzögerungswert gemäß den durch die Zuordnungsbänder der EG-Richtlinie ECE-R13 festgelegten Zuordnungsfunktionen bestimmt werden, ist außerdem auf einfache Weise eine Erfüllung der gesetzlichen Zulassungsvorschriften unabhängig von der Beladung des Fahrzeuges sogar bei Verwendung gleichartig ausgelegter Bremsanlagen für die gesamte Fahrzeugpalette gewährleistet.

Bevorzugtes Anwendungsgebiet der Erfindung sind Fahrzeuge mit konventionellen Druckmittelbremsanlagen mit einer Aufteilung in Vorderachs- und Hinterachsbremskreis. Vorzugsweise sind für die Anwendung der Erfindung in Betracht kommende Fahrzeuge des weiteren mit einem Antiblockiersystem ausgestattet, welches bereits über Informationen über den Bremsschlupf der einzelnen Räder verfügt. Die Erfindung wird dann vorzugsweise als eine Erweiterung des Steuerungsalgorithmus des Antiblockiersystems ausgeführt. Die Erfindung kann außerdem bei sogenannten elektronisch gesteuerten Bremssystemen (EBS) vorteilhaft angewandt werden, welche durch die Verwendung eines ein elektrisches Signal abgebenden Bremswertgebers anstatt eines herkömmlichen Fußbremsventils charakterisiert werden. Das elektrische Signal des Bremswertgebers repräsentiert dann den Bremswunsch des Fahrers. Bei derartigen elektronisch gesteuerten Bremssystemen ist es im Gegensatz zu der vorliegenden Erfindung bereits bekannt, die Bremskraft derart zu regeln, daß der die wirkliche Abbremsung des Fahrzeugs repräsentierende tatsächliche Verzögerungswert relativ genau einem den Bremswunsch des Fahrers repräsentierenden Soll-Verzögerungswert entspricht. Ein derartiges Verfahren wird auch als Verzögerungsregelung bezeichnet.

Im Gegensatz hierzu wird bei der vorliegenden Erfindung kein Soll-Verzögerungswert verwendet, sondern ein nachfolgend noch näher beschriebener Mindestverzögerungswert und/oder ein Höchstverzögerungswert.

Weitere Vorteile der Erfindung sowie vorteilhafte Ausgestaltungen sind in dem nachfolgend beschriebenen Ausführungsbeispiel angegeben, welches anhand von Zeichnungen näher erläutert wird.

Es zeigen:
- Fig. 1: eine für die Anwendung des erfindungsgemäßen Verfahrens bevorzugte Ausführung einer Bremsanlage in schematischer Darstellung und
- Fig. 2: eine bevorzugte Zuordnungsvorschrift für die Bestimmung des Mindestverzögerungswertes und des Höchstverzögerungswertes und
- Fig. 3, 4 und 5: eine bevorzugte Ausführungsform des erfindungsgemäßen Verfahrens in Flußdiagramm-Darstellung.

Es werden in den Figuren gleiche Bezugszeichen für einander entsprechende Teile und Signale verwendet.

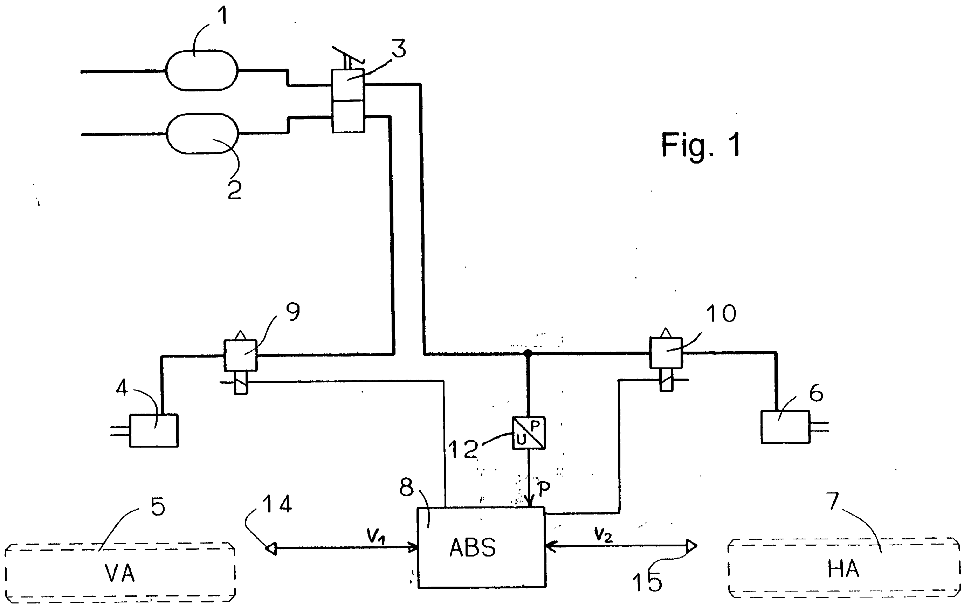

In der Fig. 1 sind für Druckleitungen dickere Linien und für elektrische Leitungen dünnere Linien vorgesehen. Die Zeichnung zeigt schematisch eine mit Druckluft betriebene Bremsanlage für einen Lkw, die zusätzlich mit einem Antiblockiersystem (ABS) ausgerüstet ist. Anstelle eines Antiblockiersystems kann auch ein elektrisches Bremssystem (EBS) vorgesehen sein, in welchem üblicherweise ein Antiblockiersystem integriert ist. Anstelle einer pneumatischen Bremsanlage kann auch eine hydraulisch oder elektrisch betätigte Bremsanlage vorgesehen sein.

Es sind zur übersichtlicheren Darstellung nur die Räder und zugehörigen pneumatischen Bauteile einer Fahrzeugseite dargestellt. Die zur Betätigung der Bremsen benötigte Druckluft wird in Druckluftbehältern (1, 2) bereitgestellt. Über ein Fußbremsventil (3) kann der Fahrer ausgehend von dem Vorratsdruck einen zur Abbremsung gewünschten Bremsdruck bzw. eine hieraus resultierende Bremskraft vorgeben. Das Fußbremsventil (3) ist zweikreisig ausgebildet und führt zum einen über ein ABS-Regelventil (9) zu einem Bremszylinder (4) für ein Rad (5) der Vorderachse (VA). Der andere Bremskreis führt über ein weiteres ABS-Regelventil (10) zu einem Bremszylinder (6) für ein Rad (7) der Hinterachse (HA). Die ABS-Regelventile (9, 10) sind vorzugsweise als elektrisch betätigbare Magnetventile ausgebildet, welche von einem elektronischen Steuergerät (8) mit elektrischen Betätigungssignalen beaufschlagbar sind.

Das Steuergerät (8) erhält über Radsensoren (14, 15) eine Information über das Drehverhalten der Räder. Sollten die Räder eine Blockierneigung zeigen, gibt das Steuergerät (8) in bekannter Weise Betätigungssignale an die Regelventile (9, 10) aus, welche den Bremsdruck herabsetzen und somit die Blockierneigung wieder beseitigen können.

Aus den von den Radsensoren (14, 15) abgegebenen Informationen berechnet das Steuergerät (8) die Drehgeschwindigkeit des jeweiligen Rades bzw. über geeignete Umrechnungskonstanten die mittleren Drehgeschwindigkeiten der Räder der Vorderachse (v₁) und der Hinterachse (v₂) des Fahrzeuges.

Das Steuergerät (8) besitzt des weiteren einen Eingang für einen Drucksensor (12) zur Messung des von dem Fahrer mittels des Fußbremsventils (3) vorgegebenen Drukkes im Hinterachsbremskreis. Alternativ oder zusätzlich könnte auch der Bremsdruck im Vorderachsbremskreis sensiert werden. Der Drucksensor (12) gibt ein Drucksignal (p) an das Steuergerät (8) ab.

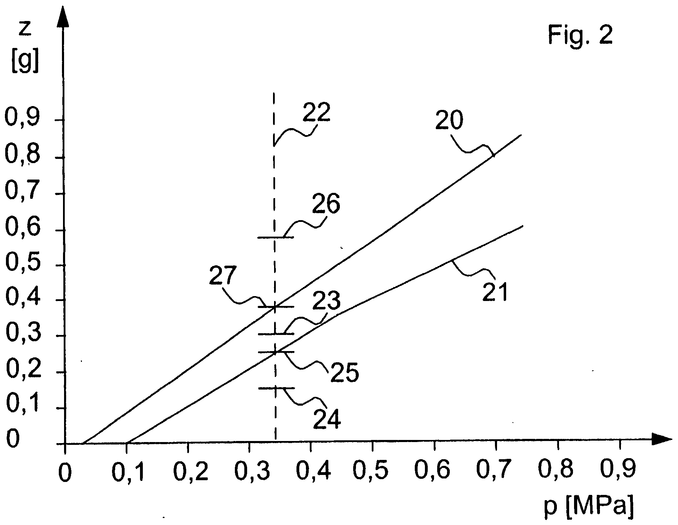

In der Darstellung gemäß Fig. 2 ist eine bevorzugte Zuordnungsvorschrift für die Bestimmung des Mindestverzögerungswertes und dessen Anwendung zur Erhöhung des Bremsdrucks in dem Hinterachsbremskreis beispielhaft dargestellt. An der Abszisse ist das von dem Fahrer mittels des Bremspedals vorgegebene Drucksignal (p), normiert in Megapascal (MPa), aufgetragen. An der Ordinate ist der tatsächliche Verzögerungswert (z) des Fahrzeuges aufgetragen, normiert in Vielfachen der Erdbeschleunigung g.

Die Linie (20) gibt die Obergrenze der gemäß ECE-R13 zulässigen tatsächlichen Verzögerungswerte (z) in Abhängigkeit von dem Drucksignal (p). Die Linie (21) stellt die unterste zulässige Grenze der zuvor erwähnten Zuordnung dar. In vorteilhafter Weise wird bei der Erfindung die Linie (21) als Zuordnungsfunktion für eine Bestimmung des Mindestverzögerungswerts (zₘᵢₙ) und die Linie (20) als Zuordnungsfunktion für eine Bestimmung des Höchstverzögerungswerts (zₘₐₓ) verwendet. Die Linien (20, 21) definieren somit ein zulässiges Zuordnungsband.

Anhand eines durch die gestrichelte Linie (22) beispielhaft festgelegten Wertes für das Drucksignal (p) soll unter Verwendung von Verzögerungsniveaus (23, 24, 25, 26, 27) die Funktionsweise der Erfindung erläutert werden. Es sei angenommen, daß bei einem Fahrzeug mit ordnungsgemäßer Bremsanlage bei dem durch die Linie (22) definierten Drucksignal (p) ein tatsächlicher Verzögerungswert (z) gemäß dem Niveau (23) erreicht wird. Wenn nun abweichend hiervon bei einer nicht ordnungsgemäßen Funktion der Bremsanlage, z. B. durch verölte Bremsbeläge oder infolge von Temperaturfading im Vorderachsbremskreis, eine Abbremsung eingeleitet wird, dann wird von dem dann eine relativ schlechte Bremswirkung erzeugenden Vorderachsbremskreis ein relativ geringer Bremsschlupf erzeugt. Die Funktion zur Anpassung des Bremsschlupfs an der Hinterachse reduziert dann zwecks einer achlastabhängigen Bremskraftverteilung die Bremskraft an der Hinterachse. Wegen der nun sowohl an der Vorderachse als auch infolge der Schlupfdifferenzregelung an der Hinterachse verringerten Bremswirkung wird im vorliegenden Beispiel nur das Niveau (24) statt des Niveaus (23) erreicht. Dies wird von dem Steuergerät (8) erkannt, welches sodann durch geeignete Betätigung des Regelventils (10) den Bremsdruck und damit die Bremskraft in dem Hinterachsbremskreis derart anhebt, daß das auf der Linie (21) liegende Niveau (25) erreicht wird.

Wenn andernfalls z. B. bei einem unbeladenen Fahrzeug mit ordnungsgemäß arbeitender Bremsanlage der tatsächliche Verzögerungswert (z) ohne Einwirkung der Erfindung oberhalb der die erwünschte Verzögerungs-Obergrenze darstellenden Linie (20) liegen würde, z. B. bei dem Niveau (26), dann erkennt das Steuergerät (8) bereits bei Erreichen der Linie (20) einen Bedarf zur Bremskraftbegrenzung und bewirkt durch Betätigung des Regelventils (9) ein Konstanthalten oder Absenken des Bremsdrucks in dem Vorderachsbremskreis, so daß das auf der Linie (20) liegende Verzögerungsniveau (27) nach Erreichen beibehalten wird. Hierbei wird für den Hinterachsbremskreis vorzugsweise zusätzlich die im folgenden noch erläuterte Schlupfdifferenzregelung durchgeführt.

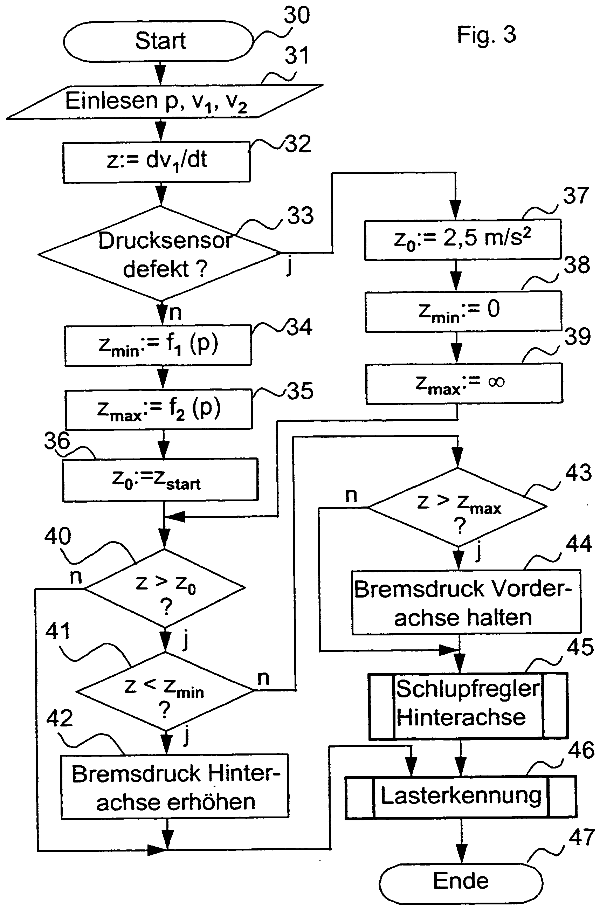

In den Fig. 3, 4 und 5 ist eine bevorzugte Ausgestaltung der Erfindung als Flußdiagramm dargestellt. Das gemäß Fig. 3 mit dem Block (30) beginnende Verfahren wird fortlaufend als Teil eines Steuerprogramms in dem Steuergerät (8) ausgeführt. In einem Datentransferblock (31) werden sodann das mittels des Drucksensors (12) ermittelte Drucksignal (p) sowie die mittels der Sensoren (14, 15) ermittelten Geschwindigkeiten (v₁, v₂) eingelesen.

In einem hierauf folgenden Zuweisungsblock (32) wird der tatsächliche Verzögerungswert (z) als erste zeitliche Ableitung der Vorderachsgeschwindigkeit (v₁) nach der Zeit (t) berechnet. Statt der Vorderachsgeschwindigkeit (v₁) kann auch der Mittelwert der einzelnen Drehgeschwindigkeiten aller Räder verwendet werden. In einem darauffolgenden Verzweigungsblock (33) wird überprüft, ob der Drucksensor (12) defekt ist bzw. ob das Drucksignal (p) unplausibel ist. Wenn dies nicht der Fall ist, wird zu einem Zuweisungsblock (34) verzweigt, in dem der Mindestverzögerungswert (zₘᵢₙ) mittels einer Zuordnungsfunktion (f₁(p)) bestimmt wird. Sodann wird in einem Zuweisungsblock (35) der Höchstverzögerungswert (zₘₐₓ) mittels einer Zuordnungsfunktion (f₂(p)) bestimmt. Die Zuordnungsfunktionen (f₁(p), f₂(p)) sind vorzugsweise in dem Steuergerät (8) gespeichert. Sie entsprechen vorzugsweise den Linien (21, 20) gemäß Fig. 2. Des weiteren wird in einem Zuweisungsblock (36) eine als Startschwelle für die nachfolgende Bremsdruckregelung verwendete Variable (zₒ) auf einen in dem Steuergerät (8) gespeicherten Wert (zₛₜₐᵣₜ) gesetzt, welcher vorzugsweise bei etwa 1 m/s² liegt.

Falls jedoch ein Defekt an dem Drucksensor (12) oder ein unplausibles Drucksignal (p) vorliegt, wird von dem Block (33) zu den aufeinanderfolgenden Zuweisungsblökken (37, 38, 39) verzweigt, in welchen die zuvor erläuterten Größen (zₘᵢₙ, zₘₐₓ, zₒ) auf neutrale Werte gesetzt werden, die einen sicheren Betrieb der Bremsanlage ohne Verwendung des Drucksignals (p) gewährleisten. Hierbei wird zₒ = 2,5 m/s², zₘᵢₙ = 0 und zₘₐₓ = ∞ bzw. auf den größten darstellbaren Wert gesetzt.

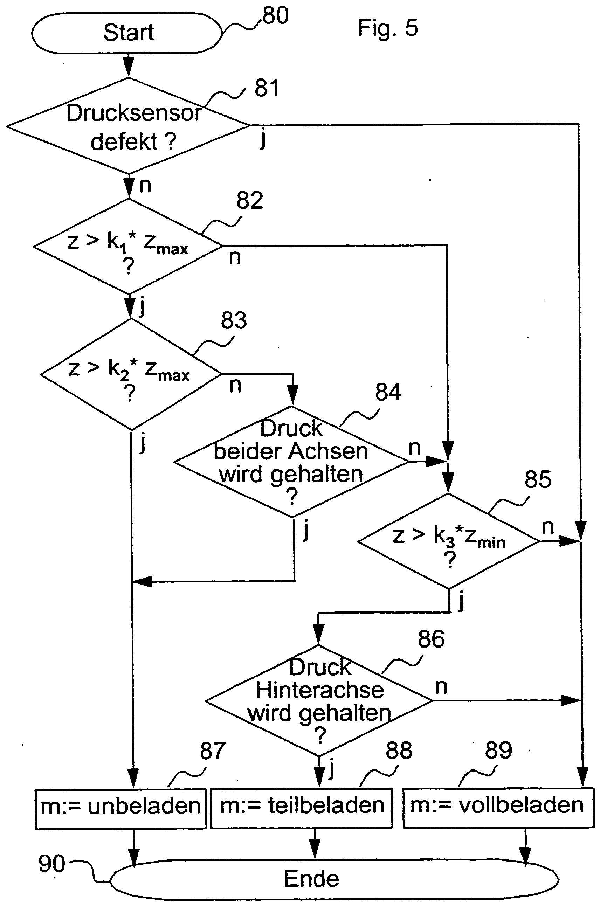

Sodann wird in einem Verzweigungsblock (40) überprüft, ob ein für eine Bremsdruckmanipulation gemäß der vorliegenden Erfindung ausreichend großer tatsächlicher Verzögerungswert (z) vorliegt, d.h. ob der Verzögerungswert (z) die Startschwelle (zₒ) überschreitet. Wenn dies nicht der Fall ist, wird unter Umgehung der Blöcke (41, 42, 43, 44, 45) direkt zu dem Unterprogrammblock (46) verzweigt, in dem die Beladung des Fahrzeuges abgeschätzt wird. Der Unterprogrammblock (46) wird anhand der Fig. 5 noch näher erläutert.

Anderenfalls wird mit dem Verzweigungsblock (41) fortgefahren, wo überprüft wird, ob der tatsächliche Verzögerungswert (z) den Mindestverzögerungswert (zₘᵢₙ) unterschreitet. Wenn dies der Fall ist, wird zu einem Block (42) verzweigt, in dem der Bremsdruck im Hinterachsbremskreis durch geeignete Betätigung des Regelventils (10) um einen vorgegebenen Druckschritt erhöht wird. Anschließend mündet der Verfahrensablauf ebenfalls in dem Unterprogrammblock (46).

Falls in dem bereits erwähnten Verzweigungsblock (41) festgestellt wird, daß der tatsächliche Verzögerungswert (z) den Mindestverzögerungswert (zₘᵢₙ) erreicht oder überschritten hat, dann wird in einem weiteren Verzweigungsblock (43) geprüft, ob der tatsächliche Verzögerungswert (z) auch bereits den Höchstverzögerungswert (zₘₐₓ) erreicht oder geringfügig überschritten hat. Falls diese Bedingung erfüllt ist, wird zu einem Block (44) verzweigt, in dem der Bremsdruck im Vorderachsbremskreis durch geeignete Betätigung des Regelventils (9) konstant gehalten oder abgesenkt wird.

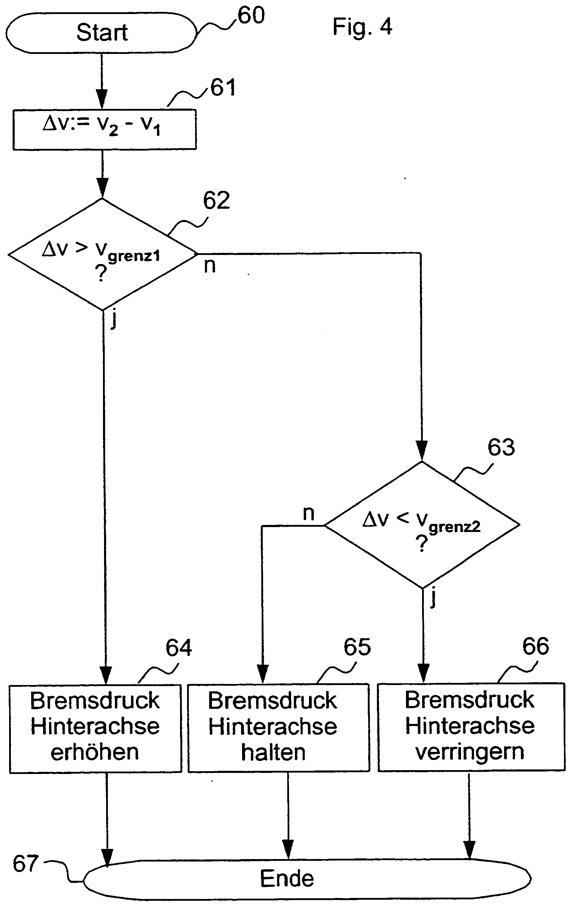

Sodann wird der im folgenden anhand der Fig. 4 noch näher zu erläuternde Unterprogrammblock (45) ausgeführt, in welchem die Schlupfdifferenzregelung durch Modulation des Hinterachsbremsdrucks zur Erzielung einer achslastabängigen Bremskraftverteilung ausgeführt wird. Daraufhin wird der Unterprogrammblock (46) ausgeführt.

Das Verfahren gemäß Fig. 3 endet mit dem Block (47).

Der in der Fig. 4 im einzelnen dargestellte Unterprogrammblock (45) beginnt mit dem Block (60). In einem darauffolgenden Zuweisungsblock (61) wird eine Geschwindigkeitsdifferenz (Δv) als Differenz zwischen der Hinterachsgeschwindigkeit (v₂) zu der Vorderachsgeschwindigkeit (v₁) berechnet. Diese Differenz entspricht der Bremsschlupfdifferenz zwischen der Hinterachse (HA) und der Vorderachse (VA).

Sodann wird in einem Verzweigungsblock (62) überprüft, ob die Geschwindigkeitsdifferenz (Δv) einen ersten Grenzwert (v_{grenz1}) überschreitet. Wenn diese Bedingung erfüllt ist, deutet dies auf eine im Vergleich zur Bremskraft an der Vorderachse unerwünscht geringe Bremskraft an der Hinterachse hin. Daher wird zur Erhöhung der Bremskraft an der Hinterachse zu dem Block (64) verzweigt, wo der Bremsdruck im Hinterachsbremskreis um einen vorgegebenen Druckschritt erhöht wird.

Falls die Bedingung gemäß Verzweigungsblock (62) nicht erfüllt ist, so wird zu einem weiteren Verzweigungsblock (63) verzweigt, in dem geprüft wird, ob die Geschwindigkeitsdifferenz (Δv) einen zweiten Grenzwert (v_{grenz2}) unterschreitet. Wenn diese Bedingung erfüllt ist, so wird zu einem Block (66) verzweigt, in welchem der Bremsdruck im Hinterachsbremskreis verringert wird, so daß durch die sich hieraus ergebende Bremskraftverringerung an der Hinterachse die Geschwindigkeitsdifferenz (Δv) in Richtung des Wertes Null verändert wird. Anderenfalls wird in einem Block (65) ein Ansteuersignal zum Halten des Bremsdrucks im Hinterachsbremskreis an das Regelventil (10) abgegeben.

Bevorzugte Werte für die Grenzwerte (v_{grenz1}, v_{grenz2}) sind v_{grenz1} = 0,5 Km/h und v_{grenz2} = -1 Km/h.

Sodann endet der Unterprogrammblock (45) mit dem Block (67).

Der in der Fig. 5 im einzelnen dargestellte Unterprogrammblock (46) dient zur Abschätzung der Beladung des Fahrzeuges. Hierbei wird im vorliegenden Ausführungsbeispiel nach den Zuständen "vollbeladen", "teilbeladen" und "unbeladen" unterschieden. Es sind auch weitere Unterscheidungsstufen möglich.

Beginnend mit dem Block (80), wird in einem darauffolgenden Verzweigungsblock (81) zunächst überprüft, ob der Drucksensor (12) defekt ist bzw. ob das Drucksignal (p) unplausibel ist. Wenn dies der Fall ist, wird zu dem Zuweisungsblock (89) verzweigt, in welchem eine die Fahrzeugbeladung anzeigende Variable (m) aus Sicherheitsgründen auf den Wert "vollbeladen" gesetzt wird.

Bei plausiblem Drucksignal (p) wird von dem Verzweigungsblock (81) zu dem weiteren Verzweigungsblock (82) verzweigt. Dort wird überprüft, ob der tatsächliche Verzögerungswert (z) einen als Produkt aus dem Höchstverzögerungswert (zₘₐₓ) und einem ersten Parameterwert (k₁) gebildeten Wert, welcher auf ein unbeladenes Fahrzeug hindeutet, überschreitet. Falls diese Bedingung erfüllt ist, wird in einem Verzweigungsblock (83) als weiteres Kriterium zur Erkennung des unbeladenen Zustands des Fahrzeuges geprüft, ob der tatsächliche Verzögerungswert (z) auch einen als Produkt aus dem Höchstverzögerungswert (zₘₐₓ) und einem zweiten Parameterwert (k₂) gebildeten höheren Wert überschreitet, d.h. der zweite Parameterwert (k₂) ist größer als der erste Parameterwert (k₁). Wenn auch diese Bedingung erfüllt ist, wird in einem Zuweisungsblock (87) die Variable (m) auf den Wert "unbeladen" gesetzt.

Falls das weitere Kriterium gemäß Block (83) nicht erfüllt ist, wird in einem Verzweigungsblock (84) geprüft, ob das Steuergerät (8) infolge der zuvor anhand der Fig. 3 und 4 beschriebenen Regelungsfunktionen an die beiden Regelventile (9, 10) des Vorderachs- und des Hinterachsbremskreises Signale zum Halten des jeweiligen Bremsdrucks ausgibt. Falls dies der Fall ist, wird ebenfalls zu dem erwähnten Zuweisungsblock (87) verzweigt, in dem die Variable (m) auf den Wert "unbeladen" gesetzt wird.

Wenn jedoch die in den Blöcken (82, 84) jeweils überprüften Bedingungen nicht erfüllt sind, wird das Verfahren mit dem Verzweigungsblock (85) fortgesetzt. Dort wird überprüft, ob der tatsächliche Verzögerungswert (z) einen als Produkt aus dem Mindestverzögerungswert (zₘᵢₙ) und einem dritten Parameterwert (k₃) gebildeten Wert, welcher auf ein voll beladenes Fahrzeug hindeutet, überschreitet. Bei Unterschreitung dieses Wertes wird die Variable (m) in dem Zuweisungsblock (89) auf den Wert "vollbeladen" gesetzt.

Bei Überschreitung hingegen wird in einem Verzweigungsblock (86) überprüft, ob das Steuergerät (8) infolge der Regelungsfunktionen an das Regelventil (10) des Hinterachsbremskreises ein Signal zum Halten des jeweiligen Bremsdrucks ausgibt. Falls dies der Fall ist, wird zu einem Zuweisungsblock (88) verzweigt, in dem die Variable (m) auf den Wert "teilbeladen" gesetzt wird. Anderenfalls wird zu dem Zuweisungsblock (89) verzweigt, in dem Variable (m) auf den Wert "vollbeladen" gesetzt wird.

Bevorzugte Werte für die Parameterwerte (k₁, k₂, k₃) sind k₁ = 0,9, k₂ = 1,5 und k₃ = 1,5.

Sodann endet der Unterprogrammblock (46) mit dem Block (90).

## Patentansprüche

1. Verfahren zur Abbremsung eines Fahrzeuges, welches wenigstens eine Vorderachse (VA) und eine Hinterachse (HA) sowie eine auf die Räder (5, 7) dieser Achsen (VA, HA) einwirkende blockiergeschützte Bremsanlage (1, 2, 3, 4, 6, 8, 9, 10, 14, 15) und ein Mittel (12) zur Erfassung des Bremswunschs des Fahrers aufweist, wobei zur Erzielung einer gewünschten Bremskraftverteilung zwischen der Vorderachse (VA) und der Hinterachse (HA) die Bremskraft an der Hinterachse (HA) automatisch derart angepasst wird, dass der Bremsschlupf an der Hinterachse im wesentlichen dem Bremsschlupf der Vorderachse entspricht, und wobei ein die wirkliche Abbremsung des Fahrzeugs repräsentierender tatsächlicher Verzögerungswert (z) bestimmt wird, **dadurch gekennzeichnet, dass** kein Soll-Verzögerungswert bestimmt wird, sondern ein dem Bremswunsch des Fahrers zugeordneter Grenzverzögerungswert (zₘᵢₙ, zₘₐₓ) bestimmt wird und die Bremskraft an wenigstens einer Achse (VA, HA) automatisch angepasst wird, wenn ein unerwünschter Unterschied zwischen dem gemessenen tatsächlichen Verzögerungswert (z) und dem Grenzverzögerungswert (zₘᵢₙ, zₘₐₓ) festgestellt wird.

2. Verfahren nach Anspruch 1, **dadurch gekennzeichnet, daß** als ein Grenzverzögerungswert ein einen unteren zulässigen Grenzwert darstellender Mindestverzögerungswert (zₘᵢₙ) bestimmt wird, und daß automatisch die Bremskraft an der Hinterachse (HA) erhöht wird, wenn der gemessene tatsächliche Verzögerungswert (z) den Mindestverzögerungswert (zₘᵢₙ) unterschreitet.

3. Verfahren nach Anspruch 2, **dadurch gekennzeichnet, daß** die Bremskraft an der Hinterachse (HA) zumindest so weit erhöht wird, daß der gemessene tatsächliche Verzögerungswert (z) den Mindestverzögerungswert (zₘᵢₙ) erreicht.

4. Verfahren nach einem der Ansprüche 2 bis 3, **dadurch gekennzeichnet, daß** für die Bestimmung des Mindestverzögerungswertes (zₘᵢₙ) eine Zuordnungsvorschrift (f₂) angewandt wird, durch die jedem Bremswunsch des Fahrers ein für den jeweiligen Fahrzeugtyp vorgeschriebener Mindestverzögerungswert (zₘᵢₙ) zugeordnet wird.

5. Verfahren nach Anspruch 4, **dadurch gekennzeichnet, daß** als Zuordnungsvorschrift (f₂) die Untergrenze des ECE-Auslegungsbandes für beladene Fahrzeuge verwendet wird.

6. Verfahren nach einem der Ansprüche 2 bis 5, **dadurch gekennzeichnet, daß** als ein Grenzverzögerungswert ein einen oberen zulässigen Grenzwert darstellender Höchstverzögerungswert (zₘₐₓ) bestimmt wird, und daß automatisch die Gesamtbremskraft des Fahrzeuges begrenzt oder verringert wird, wenn der gemessene tatsächliche Verzögerungswert (z) den Höchstverzögerungswert (zₘₐₓ) überschreitet.

7. Verfahren nach Anspruch 6, **dadurch gekennzeichnet, daß** zur automatischen Begrenzung der Gesamtbremskraft des Fahrzeuges die Bremskraft an der Vorderachse (VA) im wesentlichen konstant gehalten oder verringert wird.

8. Verfahren nach einem der Ansprüche 6 oder 7, **dadurch gekennzeichnet, daß** die Gesamtbremskraft des Fahrzeuges derart begrenzt oder verringert wird, daß der gemessene tatsächliche Verzögerungswert (z) den Höchstverzögerungswert (zₘₐₓ) im wesentlichen nicht überschreitet.

9. Verfahren nach einem der Ansprüche 6 bis 8, **dadurch gekennzeichnet, daß** für die Bestimmung des Höchstverzögerungswertes (zₘₐₓ) eine Zuordnungsvorschrift (f₁) angewandt wird, durch die jedem Bremswunsch des Fahrers ein für den jeweiligen Fahrzeugtyp vorgeschriebener Höchstverzögerungswert (zₘₐₓ) zugeordnet wird.

10. Verfahren nach Anspruch 9, **dadurch gekennzeichnet, daß** als Zuordnungsvorschrift (f₁) die Obergrenze des ECE-Auslegungsbandes für beladene Fahrzeuge verwendet wird.

11. Verfahren nach einem der Ansprüche 6 bis 10, **dadurch gekennzeichnet, daß** aus der Relation des gemessenen tatsächlichen Verzögerungswertes (z) zu dem Mindestverzögerungswert (zₘᵢₙ) und/oder dem Höchstverzögerungswert (zₘₐₓ) der Beladungszustand (m) des Fahrzeugs abgeleitet wird.

12. Verfahren nach einem der vorhergehenden Ansprüche, **dadurch gekennzeichnet, daß** zur Bestimmung des Bremswunschs des Fahrers ein elektrisches Signal eines Bremswertgebers verwendet wird.

13. Verfahren nach einem der Ansprüche 1 bis 11, **dadurch gekennzeichnet, daß** zur Bestimmung des Bremswunschs des Fahrers ein Drucksignal (p) verwendet wird, welches den mittels eines Fußbremsventils (3) vorgegebenen Bremsdruck repräsentiert.

## Claims

1. Method for braking a vehicle which has at least one front axle (VA) and one rear axle (HA) and an anti-lock brake system (1, 2, 3, 4, 6, 8, 9, 10, 14, 15) which acts on the wheels (5, 7) of these axles (VA, HA), and a means (12) for detecting the braking request of the driver, wherein in order to achieve a desired braking force distribution between the front axle (VA) and the rear axle (HA) the braking force at the rear axle (HA) is automatically adapted in such a way that the brake slip at the rear axle corresponds essentially to the brake slip of the front axle, and wherein an actual deceleration value (z) which represents the actual braking of the vehicle is determined, **characterized in that** a setpoint deceleration value is not determined but rather a limiting deceleration value (zₘᵢₙ, zₘₐₓ) which is assigned to the braking request of the driver, and the braking force is adapted automatically at at least one axle (VA, HA) if an undesired difference is detected between the measured actual deceleration value (z) and the limiting deceleration value (zₘᵢₙ, zₘₐₓ)

2. Method according to Claim 1, **characterized in that** a minimum deceleration value (zₘᵢₙ) which represents a lower permissible limiting value is determined as a limiting deceleration value, and **in that** the braking force at the rear axle (HA) is increased automatically if the measured actual deceleration value (z) undershoots the minimum deceleration value (zₘᵢₙ).

3. Method according to Claim 2, **characterized in that** the braking force at the rear axle (HA) is increased at least to such an extent that the measured actual deceleration value (z) reaches the minimum deceleration value (zₘᵢₙ).

4. Method according to one of Claims 2 to 3, **characterized in that** for the determination of the minimum deceleration value (zₘᵢₙ) an assignment rule (f₂) is applied by means of which each braking request of the driver is assigned a minimum deceleration value (zₘᵢₙ) which is prescribed for the respective type of vehicle.

5. Method according to Claim 4, **characterized in that** the lower limit of the ECE design band for loaded vehicles is used as the assignment rule (f₂).

6. Method according to one of Claims 2 to 5, **characterized in that** a maximum deceleration value (zₘₐₓ) which constitutes an upper permissible limiting value is determined as a limiting deceleration value, and **in that** the overall braking force of the vehicle is limited or reduced automatically if the measured actual deceleration value (z) exceeds the maximum deceleration value (zₘₐₓ).

7. Method according to Claim 6, **characterized in that** in order to automatically limit the overall braking force of the vehicle the braking force at the front axle (VA) is kept essentially constant or reduced.

8. Method according to one of Claims 6 or 7, **characterized in that** the overall braking force of the vehicle is limited or reduced in such a way that the measured actual deceleration value (z) essentially does not exceed the maximum deceleration value (zₘₐₓ).

9. Method according to one of Claims 6 to 8, **characterized in that** for the determination of the maximum deceleration value (zₘₐₓ) an assignment rule (f₁) is applied by means of which each driving request of the driver is assigned a maximum deceleration value (zₘₐₓ) which is prescribed for the respective type of vehicle.

10. Method according to Claim 9, **characterized in that** the upper limit of the ECE design band for loaded vehicles is used as the assignment rule (f₁).

11. Method according to one Claims 6 to 10, **characterized in that** the load state (m) of the vehicle is derived from the relation of the measured actual deceleration value (z) to the minimum deceleration value (zₘᵢₙ) and/or the maximum deceleration value (zₘₐₓ).

12. Method according to one of the preceding claims, **characterized in that** an electrical signal of a braking value generator is used to determine the braking request of the driver.

13. Method according to one Claims 1 to 11, **characterized in that** in order to determine the braking request of the driver a pressure signal (p) is used which represents the brake pressure which is predefined by means of a foot brake valve (3).

## Revendications

1. Procédé pour freiner un véhicule comprenant au moins un essieu avant (VA) et un essieu arrière (HA) ainsi qu'un système de freinage (1, 2, 3, 4, 6, 8, 9, 10, 14, 15) protégé contre le blocage agissant sur les roues (5, 7) desdits essieux (VA, HA), et un moyen (12) destiné à détecter l'intention de freinage du conducteur, dans lequel la force de freinage sur l'essieu arrière (HA) est automatiquement adaptée pour atteindre une répartition de la force de freinage souhaitée entre l'essieu avant (VA) et l'essieu arrière (HA) de manière à ce que le glissement au freinage sur l'essieu arrière corresponde sensiblement au glissement au freinage de l'essieu avant, et dans lequel une valeur de retard (z) effective représentant un freinage réel du véhicule est déterminée, **caractérisé en ce qu'**aucune valeur de retard nominale n'est déterminée, mais **en ce qu'**une valeur de retard limite (zₘᵢₙ, zₘₐₓ) associée à l'intention de freinage du conducteur est déterminée et **en ce que** la force de freinage sur au moins un essieu (VA, HA) est automatiquement adaptée lorsqu'une différence indésirable entre la valeur de retard (z) effective mesurée et la valeur de retard limite (zₘᵢₙ, zₘₐₓ) est établie.

2. Procédé selon la revendication 1, **caractérisé en ce qu'**une valeur de retard minimale (zₘᵢₙ) représentant une valeur limite admissible inférieure est déterminée en tant que valeur de retard limite et **en ce que** la force de freinage sur l'essieu arrière (HA) est automatiquement augmentée lorsque la valeur de retard (z) effective mesurée s'abaisse en dessous de la valeur de retard minimale (zₘᵢₙ).

3. Procédé selon la revendication 2, **caractérisé en ce que** la force de freinage sur l'essieu arrière (HA) est augmentée au moins jusqu'à ce que la valeur de retard (z) effective mesurée atteigne la valeur de retard minimale (zₘᵢₙ).

4. Procédé selon l'une quelconque des revendications 2 à 3, **caractérisé en ce que**, pour déterminer la valeur de retard minimale (zₘᵢₙ), une instruction d'affectation (f₂) est appliquée, par l'intermédiaire de laquelle une valeur de retard minimale (zₘᵢₙ) prédéfinie pour le type de véhicule respectif est affectée à chaque intension de freinage du conducteur.

5. Procédé selon la revendication 4, **caractérisé en ce que** la limite inférieure de la bande de conception ECE pour les véhicules en charge est utilisée en tant qu'instruction d'affectation (f₂).

6. Procédé selon l'une quelconque des revendications 2 à 5, **caractérisé en ce qu'**une valeur de retard supérieure (zₘₐₓ) représentant une valeur limite admissible supérieure est utilisée en tant que valeur de retard limite et **en ce que** la force de freinage totale du véhicule est automatiquement limitée ou réduite lorsque la valeur de retard (z) effective mesurée s'abaisse en dessous de la valeur de retard supérieure (zₘₐₓ).

7. Procédé selon la revendication 6, **caractérisé en ce que** la force de freinage sur l'essieu avant (VA) est maintenue sensiblement constante ou est réduite pour limiter automatiquement la force de freinage totale du véhicule.

8. Procédé selon l'une des revendications 6 ou 7, **caractérisé en ce que** la force de freinage totale du véhicule est limitée ou réduite de manière à ce que la valeur de retard (z) effective mesurée ne dépasse pas sensiblement la valeur de retard supérieure (zₘₐₓ).

9. Procédé selon l'une quelconque des revendications 6 à 8, **caractérisé en ce que**, pour déterminer la valeur de retard supérieure (zₘₐₓ), une instruction d'affectation (f₁) est appliquée, par l'intermédiaire de laquelle la valeur de retard supérieure (zₘₐₓ) prédéfinie pour le type de véhicule respectif est affectée à la valeur de freinage respective.

10. Procédé selon la revendication 9, **caractérisé en ce que** la limite supérieure de la bande de conception ECE pour des véhicules en charge est utilisée en tant qu'instruction d'affectation (f₁).

11. Procédé selon l'une quelconque des revendications 6 à 10, **caractérisé en ce que** l'état de charge (m) du véhicule est dérivé de la relation entre la valeur de retard (z) effective mesurée et la valeur de retard minimale (zₘᵢₙ) et/ou la valeur de retard supérieure (zₘₐₓ).

12. Procédé selon l'une quelconque des revendications précédentes, **caractérisé en ce qu'**un signal électrique d'un générateur de valeur de freinage est utilisé pour déterminer l'intention de freinage du conducteur.

13. Procédé selon l'une quelconque des revendications 1 à 11, **caractérisé en ce qu'**un signal de pression (p) est utilisé pour déterminer l'intention de freinage du conducteur, lequel signal de pression représente la pression de freinage prédéterminée au moyen d'une vanne de pédale de frein (3).
